# EUROPÄISCHE PATENTSCHRIFT

(11) **EP 2 709 226 B1**
(45) Veröffentlichungstag und Bekanntmachung des Hinweises auf die Patenterteilung: **25.03.2015**
(21) Anmeldenummer: 13184187.6
(22) Anmeldetag: 12.09.2013
(51) Int. Cl.: H02H 3/05, H02J 3/38

(54) **Schaltungsanordnung, sowie Pegelwandler und Vergleicherschaltung für die Schaltungsanordnung**
Circuit arrangement, and level converter and comparator circuit for the circuit arrangement
Agencement de circuit ainsi que convertisseur de niveau et circuit comparateur pour l'agencement de circuit

(30) Priorität: 17.09.2012 DE 102012018411
(43) Veröffentlichungstag der Anmeldung: 19.03.2014
(73) Patentinhaber: Kostal Industrie Elektrik GmbH, 58513 Lüdenscheid (DE)
(72) Erfinder: Bartling, Ralf, Dr., 58730 Fröndenberg (DE)
(74) Vertreter: Kerkmann, Detlef

(56) Entgegenhaltungen:
- EP-A1- 0 924 585
- WO-A1-03/077396
- DE-U1-202009 018 199

## Beschreibung

Die Erfindung betrifft eine Schaltungsanordnung gemäß dem Oberbegriff des Anspruchs 1. Die Erfindung betrifft außerdem einen Pegelwandler und eine Vergleicherschaltung für eine derartige Schaltungsanordnung.

Anlagen zur Umwandlung regenerativer Energien, wie zum Beispiel Windkraftoder Photovoltaikanlagen weisen zumeist einen Wechselrichter auf, welcher eine Spannung in der Höhe und Frequenz der üblichen Netzwechselspannung ausgibt. Dabei ist es zumeist vorgesehen, dass die elektrische Ausgangsleistung des Wechselrichters außer in ein lokales Verbrauchernetz auch ganz oder teilweise in ein öffentliches Spannungsnetz eingespeist werden kann.

Kommt es zu einem Ausfall des öffentlichen Versorgungsspannungsnetzes oder wird das lokale Verbrauchernetz freigeschaltet, z. B. durch das Herausnehmen von Sicherungen zum öffentlichen Versorgungsspannungsnetz, so muss sicher gewährleistet sein, dass auch seitens des Wechselrichters keine elektrische Energie mehr in das Verbrauchernetz eingespeist wird, da ansonsten erhebliche Gefährdungen entstehen können.

Um Freischaltungen automatisch zu erkennen, müssen die Phasenspannungen des öffentlichen Versorgungsnetzes einfehlersicher überwacht werden. Außerdem ist eine Trenneinrichtung vorzusehen, um den Wechselrichter vom Verbrauchernetz zu trennen, wozu aus Sicherheitsgründen zumeist mehrere allpolig trennende elektromechanische Schalter vorgesehen sind.

Um eine hohe Fehlersicherheit gegenüber möglichen Fehlerszenarien (Einfehlersicherheit) zu erreichen, ist es üblich, die Überwachung der Phasenspannungen redundant auszulegen, d. h. im Allgemeinen doppelt vorzusehen. Nur wenn beide Überwachungsinstanzen eine korrekte Netzspannung erkennen, wird eine Verbindung des Wechselrichters mit dem Versorgungsnetz zugelassen. Problematisch hierbei ist, dass sich durch die doppelte Auslegung ganzer Schaltungsteile ein hoher Kostenaufwand ergibt. Hierbei gehören speziell Mikrocontroller zu den besonders kostenaufwendigen Bauteilen.

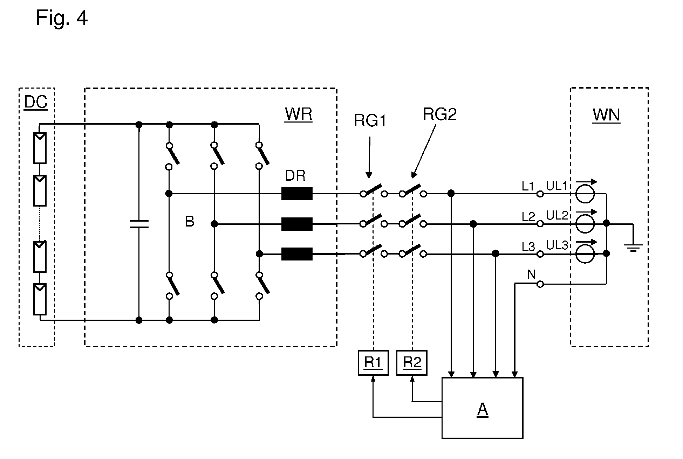

Aus der deutschen Gebrauchsmusterschrift DE 20 2009 018 199 U1 ist ein Freischaltsteuergerät bekannt, welches eine Schaltungsanordnung gemäß des Oberbegriffs des Anspruchs 1 der vorliegenden Anmeldung zeigt. Besonders aus der Figur 4 dieses Dokuments ist es bekannt, ein Freischaltsteuersystem mit einem einzigen Mikrocontroller als zentraler Steuereinheit aufzubauen, wobei dem Mikrocontroller ein Überwachungsbaustein zur Überwachung seiner Funktionsfähigkeit zugeordnet ist. Zwei Trennschaltereinheiten, werden über getrennte Steuerausgänge des Mikrocontrollers redundant gesteuert. Zudem werden von speziellen Überwachungskontakten der Trennschalter Signale abgegriffen, um die Funktionsfähigkeit der Trennschalter zu überprüfen.

Die Patentdokumente WO 03/077396 A1 und EP 0 924 585 A1 offenbaren jeweils eine Schaltungsanordnung mit mindestens einem Mikroprozessor, sowie auch eine Schaltung zur Überwachung der Arbeit des Mikroprozessors. Hierzu schlägt die WO 03/077396 A1 die Nutzung einer sogenannten Watchdog-Schaltung und die EP 0 924 585 A1 die Verwendung eines zusätzlichen Mikroprozessors vor.

Es stellte sich die Aufgabe, eine gattungsgemäße Schaltungsanordnung hinsichtlich ihrer Zuverlässigkeit und Sicherheit weiter zu verbessern.

Diese Aufgabe wird erfindungsgemäß durch die kennzeichnenden Merkmale des Hauptanspruchs 1 gelöst.

Durch die erfindungsgemäße Schaltungsanordnung kann eine Überwachung aller Phasenspannungen an den Freischaltstellen ausführt werden. Die Spannungsüberwachung beinhaltet mindestens einen relativ komplexen Verarbeitungsschritt durch den Mikrocontroller, aus dessen korrekter Ausführung die Funktionsfähigkeit des Mikrocontrollers gefolgert werden kann. Ein bei diesem Verarbeitungsschritt auftretender Fehler kann insbesondere durch einen als Spannungsvergleicherschaltung ausgeführten Überwachungsbaustein aufgedeckt werden.

Besonders vorteilhaft ist es, verschiedene Überprüfungen des Mikrocontrollers vorzusehen, von denen ein einziger Fehler ein Abschalten der Netzverbindung führt. Die Prüfungen bewirken dynamische Ausgaben auf mehreren I/O-Ports des Mikrocontrollers, um sicherzustellen, dass triviale Fehler, etwa ein Hängenbleiben des Programmablaufs des Mikrocontrollers oder ein unzulässiger Ausgabewert eines I/O-Ports zuverlässig als Fehler erkannt werden. Relativ anspruchsvolle Berechnungsaufgaben führen jeweils zu Ausgaben der I/O-Ports, die durch relativ einfach aufgebaute externe Schaltungselemente quantitativ ausgewertet werden, so dass Fehler mit vergleichsweise geringem Aufwand sicher aufgedeckt werden können.

Details der Erfindung sollen nachfolgend anhand der Zeichnung durch ein Ausführungsbeispiel einer erfindungsgemäßen Schaltungsanordnung näher erläutert werden.

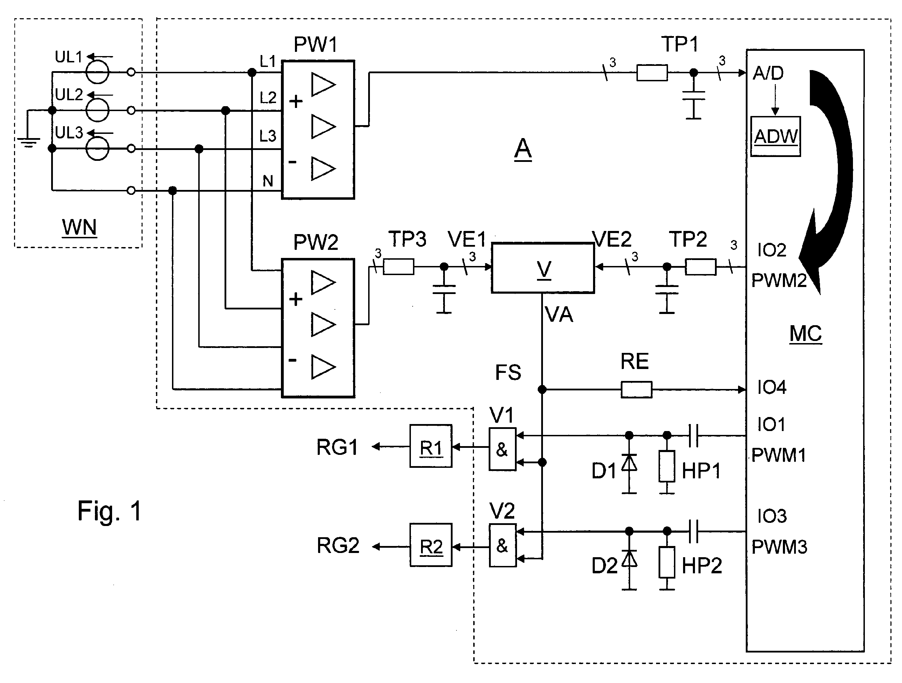

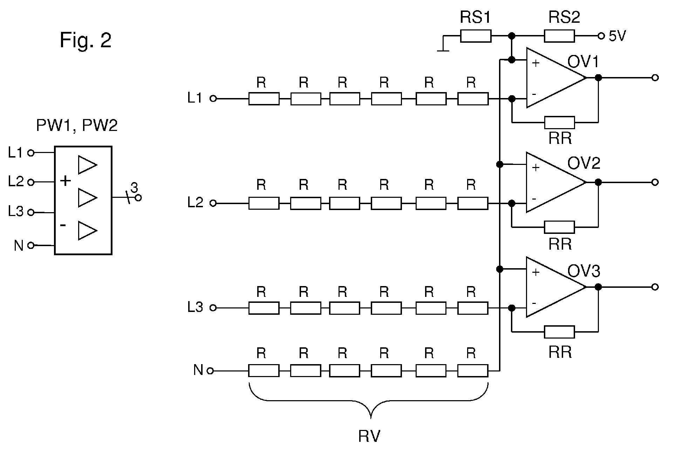

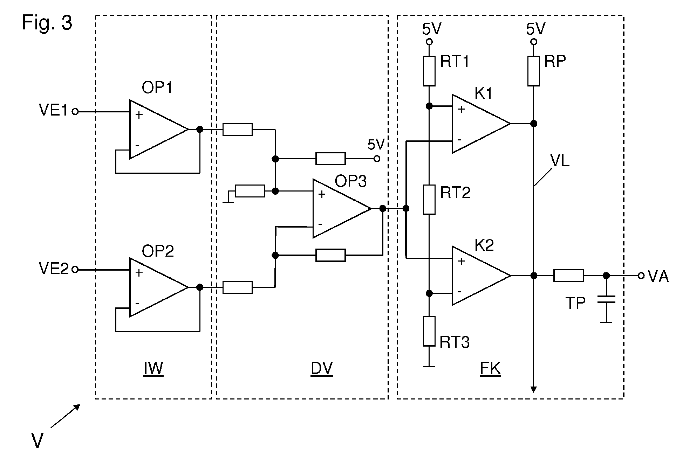

Figur 1 zeigt den Gesamtaufbau einer erfindungsgemäßen Schaltungsanordnung. Die Figuren 2 und 3 führen den bevorzugten Aufbau einzelner Schaltungsblöcke dieser Schaltung näher aus. Die Figur 4 verdeutlicht den Anwendungszusammenhang der Schaltungsanordnung. Die Schaltungsanordnung beruht auf der Idee, dass ein einzelner Mikrocontroller MC die Spannungen UL1, UL2, UL3 der Phasenleiter L1, L2, L3 quantitativ erfassen und zusätzlich seine eigene Funktionsfähigkeit überwachen kann. Hierzu weist der Mikrocontroller MC für jeden Phasenleiter L1, L2, L3 einen Eingangsport A/D für einen internen Analog-Digitalwandler ADW auf. Da Analog-Digitalwandler ADW, die zu üblichen internen Komponenten eines Mikrocontrollers MC gehören, gewöhnlich nur Spannungen in einem Kleinspannungsbereich, zumeist im Bereich von 0 V bis 5 V erfassen, ist ein erster Pegelwandler PW1 vorgesehen, der die zwischen den Phasenleitern L1, L2, L3 und dem Neutralleiter N vorliegenden Wechselspannungen UL1, UL2, UL3 jeweils in den durch die Analog-Digitalwandler ADW verarbeitbaren Spannungsbereich überträgt.

Um sowohl die vom Pegelwandler PW1 ausgegebenen Spannungssignale als auch die korrekte Funktion des Mikrocontrollers MC und der zum Mikrocontroller MC gehörenden Analog-Digitalwandler ADW zu prüfen, ist parallelgeschaltet zum ersten Pegelwandler PW1 ein zweiter Pegelwandler PW2 vorgesehen, der vorzugsweise identisch zum ersten Pegelwandler PW1 aufgebaut sein kann.

Eine vorteilhafte Ausführungsmöglichkeit eines Pegelwandlers ist in der Figur 2 als Prinzipschaltbild skizziert. Der Pegelwandler PW1 bzw. PW2, besteht aus drei Operationsverstärkern OV1, OV2, OV3, die den drei Phasenleitern L1, L2, L3 zugeordnet sind. Alle nichtinvertierenden Eingänge der drei Operationsverstärkern OV1, OV2, OV3 liegen durch eine Spannungsteileranordnung, die aus den Widerständen RS1 und RS2 besteht, auf einem mittleren Potential zwischen 0 V und 5 V. Durch Vorgabe dieses mittleren Potentials ist es möglich, sowohl die Spannungsbereiche der positiven als auch der negativen Halbwellen der Wechselspannungen UL1, UL2, UL3 der Phasenleiter L1, L2, L3 auf einen Spannungsbereich von 0 V bis 5 V abzubilden. Zur Bereitstellung eines mittleren Potentials aus der angelegten Spannung weisen die Widerstände RS1 und RS2 vorzugsweise den gleichen Widerstandswert auf.

Zur Anpassung der Potentiale an den invertierenden Eingängen der Operationsverstärkers OV1, OV2, OV3 sind weitere Spannungsteileranordnungen vorgesehen, die erstens aus jeweils einem Rückkoppelwiderstand RR bestehen, der zwischen den Ausgang und den invertierenden Eingang jedes Operationsverstärkers OV1, OV2, OV3 geschaltet ist und zu denen zweitens jeweils ein Vorwiderstand RV gehört, über den die Spannung UL1, UL2, UL3 des jeweiligen Phasenleiters L1, L2, L3 dem invertierenden Eingang des zugeordneten Operationsverstärkers OV1, OV2, OV3 zugeführt wird.

Da die relativ hohen Spannungen UL1, UL2, UL3 der Phasenleiter L1, L2, L3 fast vollständig an den Vorwiderständen RV abfallen, ist es vorteilhaft, die Vorwiderstände RV jeweils als eine Reihenschaltung von mehreren, hier beispielhaft jeweils sechs, Einzelwiderständen R auszubilden, um die relativ hohe Spannungen und Verlustleistungen auf die Einzelwiderstände R zu verteilen. Diese Reihenschaltungen von Einzelwiderständen R können vorteilhafterweise kostengünstiger sein als besonders spannungsfeste Hochlastwiderstände.

Auf gleiche Weise über mehrere Einzelwiderstände R ist auch der Neutralleiter N angeschlossen und mit den nichtinvertierenden Eingängen der Operationsverstärker OV1, OV2, OV3 verbunden.

In der Figur 1 ist ersichtlich, dass die drei Ausgänge des ersten Pegelwandlers PW über jeweils einen, zur Glättung des Spannungsverlaufs vorgesehenen ersten Tiefpass TP1, den drei Spannungserfassungseingängen A/D des Mikrocontrollers MC zugeführt sind. Die in der Figur mit \3 gekennzeichneten Leitungen, sowie die zugehörigen Ein- und Ausgänge sind jeweils dreifach vorhanden, um die Spannungen UL1, UL2, UL3 aller drei Phasenleiter L1, L2, L3 bei der Auswertung zu berücksichtigen.

Der Mikrocontroller MC erfasst die anliegenden Spannungen mit mindestens einen internen Analog-Digitalwandler ADW und gibt programmgesteuert pulsweitenmodulierte Signale PWM2 an seinen zweiten I/O-Ports IO2 aus, die jeweils den Spannungen entsprechen, die vom Analog-Digitalwandler ADW erfasst worden sind. Die Zykluszeit zwischen Erfassung durch den Analog-Digitalwandler ADW und Ausgabe der pulsweitenmodulierten Signale PWM2 ist dabei so klein, dass abtastbedingte Effekte keine Rolle spielen. Die pulsweitenmodulierten Signale PWM2 werden durch jeweils einen zweiten Tiefpass TP2 in Spannungsverläufe zurückübersetzt, die bei korrekter Funktion aller beteiligten Komponenten, den Spannungsverläufen an den drei Ausgängen des zweiten Pegelwandlers PW2 folgen.

Die Übereinstimmung dieser Spannungsverläufe wird durch eine Spannungsvergleicherschaltung V, die im Folgenden auch kurz als Spannungsvergleicher bezeichnet ist, überwacht. Den ersten Eingängen VE1 des Spannungsvergleichers V werden dazu über jeweils einen dritten Tiefpass TP3 die drei Ausgangsspannungen des zweiten Pegelwandlers PW2 zugeführt. An drei zweiten Eingängen VE2 des Spannungsvergleichers V liegen die durch die zweiten Tiefpässe TP2 aus den pulsweitenmodulierten Signalen PWM2 zeitlich gemittelten Spannungen an.

Der Mikrocontroller MC zeigt seine korrekte Funktion dadurch, dass er die an seinem I/O-Port IO2 ausgegebenen pulsweitenmodulierte Signale PWM2 so einstellt und auch in Echtzeit nachführt, dass der Spannungsvergleicher V stets zu einem positiven Vergleichsergebnis kommt.

Das Schaltungsprinzip des erfindungsgemäß aufgebauten Spannungsvergleichers V ist in der Figur 3 skizziert. Dargestellt ist der Schaltungsteil für einen einzelnen der Phasenleiter L1, L2, L3, der sich für die beiden anderen Phasenleiter entsprechend wiederholt. Der Aufbau kann nach seinen Funktionen in drei Abschnitte IW, DV, FK unterteilt werden, die in der Figur 3 mit gestrichelten Umrandungen gekennzeichnet sind.

Die beiden Eingänge VE1, VE2 führen jeweils auf den nichtinvertierenden Eingang eines Operationsverstärkers OP1, OP2, der auf seinen invertierenden Eingang rückgekoppelt ist und dadurch einen Impedanzwandler ausbildet. Der Abschnitt IW kann daher als Impedanzwandlerabschnitt des Spannungsvergleichers V bezeichnet werden. Die Ausgänge der Operationsverstärker OP1, OP2 führen auf die Eingänge eines dritten Operationsverstärkers OP3, der einen Differenzverstärker DV mit einem Ausgangsspannungsbereich von 0 V bis 5 V ausbildet. Die Ausgangsspannung des dritten Operationsverstärkers OP3 liegt an dem Eingang eines Fensterkomparators FK an.

Die Schaltpunkte des zwei Komparatorbausteine K1, K2 aufweisenden Fensterkomparators FK werden durch eine, aus drei in Reihe geschalteten Widerständen RT1, RT2, RT3 bestehende Teilerkette vorgegeben. Diese Teilerkette kann auch zur Erzeugung der Spannungsschwellen für die beiden weiteren, hier nicht dargestellten Teilschaltungen für die beiden anderen Phasenleiter mit verwendet werden und braucht daher nur einmal vorhanden zu sein. Dieses gilt auch für den Pull-up-Widerstand RP an der Verbindungsleitung VL, über die die Ausgänge aller Komparatorbausteine K1, K2 miteinander verbunden sind.

Die Funktionsweise des Spannungsvergleichers V kann folgendermaßen zusammengefasst werden. Ist die Spannungsdifferenz zwischen den Eingängen VE1, VE2 ausreichend gering, so liegt die Ausgangspannung des Differenzverstärkers DV in einem mittleren Bereich zwischen 0 V und 5 V. Hierdurch wird der der Schaltzustand des ersten Komparatorbausteins K1 durch das positive Potential an seinem nichtinvertierenden Eingang und der Schaltzustand des zweiten Komparatorbausteins K2 durch das negative Potential an seinem invertierenden Eingang bestimmt, so dass beide Komparatorbausteine K1, K2 jeweils eine positive Spannung als Ausgangssignal ausgeben, welche das durch den Pull-up-Widerstand RP vorgegebene ebenfalls positive Potential auf der Verbindungsleitung VL nicht verändert.

Übersteigt die Spannungsdifferenz an den Eingängen VE1, VE2 einen durch die Schaltungsdimensionierung vorgegebenen Wert, so ändert sich die Ausgangsspannung des Fensterkomparators FK entsprechend, wodurch das Potential auf der Verbindungsleitung VL auf einen niedrigen Wert fällt, welcher einem binären L-Pegel entspricht. Da die Verbindungsleitung VL die Ausgänge aller Komparatorbausteine K1, K2 verbindet, also auch derjenigen für die den beiden weiteren Phasenleitern zugeordneten Teilschaltungen, so genügt bereits ein Fehler beim Vergleich zweier Eingangspannungen, um das Ausgangssignal am Ausgang des Spannungsvergleichers V auf einen binären L-Pegel zu setzen.

Der Spannungsvergleicher V braucht daher nur einen einzigen Ausgang VA aufzuweisen. Wie die Figur 3 zeigt, ist dem Ausgang VA ein Tiefpassfilter TP vorgeschaltet, der zur Filterung von Störsignalen vorgesehen ist.

Die Figur 1 zeigt, dass der binäre Signalpegel am Ausgang VA des Spannungsvergleichers V, der im folgenden auch kurz als Freischaltsignal FS bezeichnet wird, auf verschiedene Weise ausgewertet und verwendet wird. So ist vorgesehen, dass durch das Freischaltsignal FS der Schaltzustand eines ersten und eines zweiten Trennschalter R1, R2 gesteuert wird. Diese Trennschalter R1, R2 sind als elektromechanische Schalter ausgeführt und bilden mindesten zwei Relais oder Schütze aus. Die Trennschalter R1, R2 weisen Relaiskontaktgruppen RG1, RG2 auf, durch die die elektrischen Verbindungen zwischen einem Wechselrichter WR und einem Wechselspannungsnetz WN allpolig hergestellt bzw. getrennt werden können. Aus Redundanzgründen sind die Relaiskontakte der ersten und der zweiten Relaiskontaktgruppen RG1, RG2 in Reihe geschaltet wie dies in der Figur 4 angedeutet ist.

Gemäß der Figur 1 beeinflusst das Freischaltsignal FS die Relaiskontaktgruppen RG1, RG2 nicht direkt, sondern jeweils über einen Verknüpfungsbaustein V1, V2, der vorzugsweise als eine logische Und-Schaltung ausgebildet ist. An jeweils einem weiteren Eingang jedes Verknüpfungsbausteins V1, V2 liegt ein Spannungssignal an, welches von einem pulsweitenmodulierten Signal PWM1 bzw. PWM3 des I/O-Ports IO1 abgeleitet wird. Diese pulsweitenmodulierten Signale PWM1, PWM3 erzeugen jeweils am Widerstand eines Hochpasses HP1, HP2 eine durch Dioden D1, D2 gleichgerichtete Spannung, deren Spannungswert bei korrekt durch den Mikrocontroller MC eingestelltem Tastverhältnis einem binären H-Pegel entspricht.

Die dynamische Erzeugung von binären Logikpegeln, wie hier mittels der Hochpässe HP1, HP2 aus pulsweitenmodulierten Signalen PWM1, PWM3, schafft eine weitere Möglichkeit zur Überprüfung des korrekten Funktionierens des Mikrocontrollers MC. Da die pulsweitenmodulierten Signalen PWM1, PWM3 durch den Programmlauf des Mikrocontrollers MC erzeugt werden, setzen diese einen funktionierenden Prozessor voraus, ganz im Gegensatz zu statischen Logikpegeln, die auch bei einem defekten oder im fehlerhaft funktionierendem Prozessor noch an I/O-Ports eines Mikrocontrollers MC vorhanden sein können.

Zudem kann das Freischaltsignal FS des Spannungsvergleichers V zusätzlich noch über einen Entkopplungswiderstand RE von einem Eingangsport IO4 als analoges oder digitales Signal eingelesen werden. Der Entkopplungswiderstand RE stellt sicher, dass der Ausgangspegel des Vergleichers V nicht durch einen Kurzschluss des I/O-Ports IO4 verändert werden kann. Bei einem nicht korrekten Wert kann der Mikrocontroller MC ebenfalls über seine 1/0-Ports IO1, IO3 eine Abschaltung der Trennschalter R1, R2 vornehmen und bei Bedarf eine Meldung darüber ausgeben.

Das Freischalten von Relaiskontaktgruppen RG1, RG2 erfordert somit das fehlerfreie Zusammenspiel jeweils mehrerer Komponenten; wobei jeder mögliche Fehler zu einem Abschalten wenigstens einer der Relaiskontaktgruppen RG1, RG2 führt und damit das Trennen des Wechselrichters WR vom Spannungsnetz WN sicherstellt. Die vorgeschlagene Schaltungsanordnung schafft eine hohe Fehlererkennungsredundanz, so dass auch mit nur einem einzigen Mikrocontroller MC eine sehr hohe Abschaltsicherheit im Fall auftretender Fehler erreicht wird.

Eine typische Anwendungsumgebung der Schaltungsanordnung ist in der Figur 4 stark vereinfacht dargestellt. Skizziert ist ein Gleichspannungsgenerator DC, bestehend etwa aus den Photoelementen einer Photovoltaikanlage, der mit einem Wechselrichter WR verbunden ist. Der Wechselrichter WR erzeugt mittels einer Brückenschaltung B auf drei Phasenleitern L1, L2, L3 Ausgangsspannungen UL1, UL2, UL3, die über Induktivitäten DR ausgekoppelt werden. Die Ausgangsspannungen UL1, UL2, UL3 sind insbesondere dazu vorgesehen, in ein Wechselspannungsnetz WN eingespeist werden, wobei die Verbindung der Phasenleiter L1, L2, L3 zwischen dem Wechselrichter WR und dem Wechselspannungsnetz WN aus Sicherheitsgründen über zwei einzeln schaltbare Relaiskontaktgruppen RG1, RG2 erfolgt, wobei jeder Relaiskontaktgruppe RG1, RG2 durch wenigstens ein Relais R1, R2 oder Schütz betätigt wird. Die Ansteuerung der Relais R1, R2 erfolgt über die in der Figur 1 dargestellte Ansteuervorrichtung A.

### Bezugszeichen

- A: Ansteuervorrichtung
- ADW: Analog-Digitalwandler
- A/D: Spannungserfassungseingänge
- B: Brückenschaltung
- DC: Gleichspannungsgenerator
- DR: Induktivitäten
- DV: Differenzverstärker
- D1, D2: Dioden
- FK: Fensterkomparator
- FS: Freischaltsignal
- HP1, HP2: Hochpässe
- IO1, IO2, IO3, IO4: I/O-Ports
- IW: Impedanzwandlerabschnitt
- IW, DV, FK: Abschnitte
- K1, K2: Komparatorbausteine
- L1, L2, L3: Phasenleiter
- MC: Mikrocontroller
- N: Neutralleiter
- OP1, OP2, OP3, OV1, OV2, OV3: Operationsverstärker
- PW1, PW2: Pegelwandler (Differenzverstärker)
- PWM1, PWM2, PWM3: pulsweitenmodulierte Signale
- R: Einzelwiderstände
- RE: Entkopplungswiderstand
- RG1, RG2: Relaiskontaktgruppen (Schaltkontakte)
- RP: Pull-up-Widerstand
- RR: Rückkoppelwiderstand
- RS1, RS2: Widerstände
- RT1, RT2, RT3: Teilerkettenwiderstände
- RV: Vorwiderstand
- R1, R2: Trennschalter (Relais oder Schütze)
- TP, TP1, TP2, TP3: Tiefpässe
- UL1, UL2, UL3: Spannungen (an den Phasenleitern)
- V: Spannungsvergleicher(schaltung)
(Überwachungsbaustein)
- VA: Ausgang des Spannungsvergleichers
- VE1, VE2: Eingänge (des Spannungsvergleichers)
- VL: Verbindungsleitung
- V1, V2: Verknüpfungsbausteine
- WN: Wechselspannungsnetz
- WR: Wechselrichter

## Patentansprüche

1. Schaltungsanordnung zur Überwachung von Spannungen (UL1, UL2, UL3) an Phasenleitern (L1, L2, L3) an einer Netzfreischaltstelle zwischen einem Wechselrichter (WR) und einem Wechselspannungsnetz (WN),
mit einem Mikrocontroller (MC), der mehrere I/O-Ports (IO1, IO2, IO3, IO4) aufweist,
wobei ein erster I/O-Port (IO1) einen ersten Eingang eines Verknüpfungsbaustein (V1) ansteuert und ein zweiter I/O-Port (IO2) einen Überwachungsbaustein (V) ansteuert, dessen Ausgang (VA) mit einem zweiten Eingang des Verknüpfungsbaustein (V1) verbunden ist,
wobei der Ausgang des Verknüpfungsbausteins (V1) einen ersten steuerbaren Trennschalter (R1) ansteuern kann, der Schaltkontakte (RG1) zum Verbinden und Trennen von Phasenleitern (L1, L2, L3) aufweist, wobei ein dritter I/O-Port (IO3) den Schaltzustand eines zweiten steuerbaren Trennschalter (R2) beeinflussen kann, dessen Schaltkontakte (RG2) in Reihe mit den Schaltkontakten (RG1) des ersten steuerbaren Trennschalters (R1) geschaltet sind,
wobei der Mikrocontroller (MC) mindestens einen Spannungserfassungseingang (A/D) aufweist, der über Schaltkontakte (RG1, RG2) des ersten und zweiten Trennschalters (R1, R2) geführte Spannungssignale der Phasenleiter (L1, L2, L3) erfasst,
**dadurch gekennzeichnet,**
dass jeder Phasenleiter (L1, L2, L3) mit Eingängen eines ersten und eines zweiten Pegelwandlers (PW1, PW2) verbunden ist, die an ihren Ausgängen für jeden Phasenleiter (L1, L2, L3) jeweils ein zur Spannung (UL1, UL2, UL3) des Phasenleiters (L1, L2, L3) gegen den Neutralleiter (N) proportionales Kleinspannungssignal ausgeben,
wobei die Ausgänge des ersten Pegelwandlers (PW1) an Spannungserfassungseingängen (A/D) des Mikrocontrollers (MC) anliegen und
wobei die Ausgänge des zweiten Pegelwandlers (PW2) an einem ersten Eingang (VE1) des Überwachungsbausteins anliegen, der einen Spannungsvergleicher (V) ausbildet,
wobei der Mikrocontroller (MC) über den zweiten I/O-Port (IO2) pro Phasenleiter (L1, L2, L3) ein pulsweitenmoduliertes Signal (PWM2) ausgibt, dessen Tastverhältnis vom am zugehörigen Spannungserfassungseingang (A/D) anliegenden Spannungswert abhängt, und das über einen Tiefpass (TP2) dem zweiten Eingang (VE2) des Spannungsvergleichers (V) zugeführt ist, wobei der Spannungsvergleicher (V) ein vom Vergleich der Spannungen an seinem ersten Eingang (VE1) und seinem zweiten Eingang (VE2) anliegenden Spannungswerten abhängiges digitales Freischaltsignal (FS) ausgibt, welches jeweils an einem Eingang des Verknüpfungsbausteins (V1) und eines weiteren von dem dritten I/O-Port (IO3) angesteuerten Verknüpfungsbausteins (V2) anliegt, dessen Ausgang den zweiten steuerbaren Trennschalter (R2) ansteuern kann.

2. Schaltungsanordnung nach Anspruch 1, **dadurch gekennzeichnet, dass** jeder der Pegelwandler (PW1, PW2) mindestens aufweist:
- einen Neutralleitereingang zum Anschluss eines Neutralleiters (N),
- mindestens einen Phasenleitereingang zum Anschluss mindestens eines Phasenleiters (L1, L2, L3),
- pro Phasenleitereingang einen Operationsverstärker (OV1, OV2, OV3), wobei die Phasenleitereingänge über Vorwiderstände (RV) mit den invertierenden Eingängen der Operationsverstärker (OV1, OV2, OV3) verbunden sind, und die Vorwiderstände (RV) als Reihenschaltung mehrerer Einzelwiderstände (R) ausgeführt sind.

3. Schaltungsanordnung nach Anspruch 2, **dadurch gekennzeichnet, dass** die Ausgangsspannungen des Pegelwandlers (PW1, PW2) innerhalb des durch den mindestens einen Spannungserfassungseingang (A/D) des Mikrocontrollers (MC) erfassbaren Spannungsbereichs liegen.

4. Schaltungsanordnung nach Anspruch 3, **dadurch gekennzeichnet, dass** die Ausgangsspannungen der Pegelwandler (PW1, PW2) im Spannungsbereich zwischen 0 V und 5 V liegen.

5. Schaltungsanordnung nach Anspruch 1, **dadurch gekennzeichnet, dass** der Spannungsvergleicher (V) pro überwachtem Phasenleiter (L1, L2, L3) mindestens aufweist:
- zwei Impedanzwandler (OP1, OP2), deren Eingänge mit den Eingangsanschlüssen (VE1, VE2) des Spannungsvergleichers (V) verbunden sind,
- einen Differenzverstärker (DV), der die Ausgangssignale der Impedanzwandler (OP1, OP2) verarbeitet und
- einen Fensterkomparator (FK), der das Ausgangssignal des Differenzverstärkers (DV) auf Übereinstimmung mit einem vorgegebenen Spannungswertebereich vergleicht und ein dem Ergebnis des Vergleichs zugeordnetes binäres Freischaltsignal (FS) ausgibt.

6. Schaltungsanordnung nach Anspruch 1, **dadurch gekennzeichnet, dass** das Freischaltsignal (FS) des Spannungsvergleichers (V) an einem I/O-Port (IO4) des Mikrocontrollers (MC) rückwirkungsfrei anliegt.

7. Schaltungsanordnung nach Anspruch 1, **dadurch gekennzeichnet, dass** das Freischaltsignal (FS) den Schaltzustand beider Trennschalter (R1, R2) mitbestimmt.

8. Schaltungsanordnung nach Anspruch 1, **dadurch gekennzeichnet, dass** der Mikrocontroller (MC) an mindestens einem I/O-Port (IO1, IO3) ein pulsweitenmoduliertes Signal (PWM1, PWM3) ausgibt, welches jeweils durch einen Hochpass (HP1, HP2) und einem Gleichrichter (D1, D2) in eine Gleichspannung gewandelt wird, die an einem Eingang eines Verknüpfungsbausteins (V1, V2) anliegt.

## Claims

1. Circuit arrangement for monitoring voltages (UL1, UL2, UL3) on phase conductors (L1, L2, L3) on a network isolating point between an inverter (WR) and an alternating voltage network (WN),
having a microcontroller (MC) which has a plurality of I/O ports (IO1, IO2, IO3, IO4),
whereby a first I/O port (IO1) actuates a first input of a logic device (V1) and a second I/O port (IO2) triggers a monitoring component (V), the output (VA) of which is connected to a second input of the logic device (V1),
whereby the output of the logic device (V1) can actuate a first controllable circuit breaker (R1) which has switching contacts (RG1) for the purpose of connecting and disconnecting phase conductors (L1, L2, L3),
whereby a third I/O port (IO3) can influence the switching status of a second controllable circuit breaker (R2) the switching contacts (RG2) of which are connected in series to the switching contacts (RG1) of the first controllable circuit breaker (R1),
whereby the microcontroller (MC) has at least one voltage sensing input (A/D) which detects voltage signals from the phase conductors (L1, L2, L3) that are conducted through the switching contacts (RG1, RG2) of the first and second circuit breaker (R1, R2),
**characterised in that**
each phase conductor (L1, L2, L3) is connected to inputs of a first and a second level converter (PW1, PW2) each of which emits at their outputs a low voltage signal for each phase conductor (L1, L2, L3) which is proportional to the voltage (UL1, UL2, UL3) of the phase conductor (L1, L2, L3) against the neutral conductor (N),
whereby the outputs of the first level converter (PW1) are applied to voltage sensing inputs (A/D) of the microcontroller (MC), and
whereby the outputs of the second level converter (PW2) are applied to a first input (VE1) of the monitoring component, which constitutes a voltage comparator (V),
whereby, through the second I/O port (IO2), the microcontroller (MC) emits a pulse width modulated signal (PWM2) for each phase conductor (L1, L2, L3), the duty cycle of which depends on the voltage rate applied at the associated voltage sensing input (A/D), and which is fed via a low pass (TP2) to the second input (VE2) of the voltage comparator (V), with the voltage comparator (V) emitting a digital isolating signal (FS) which is dependent on a comparison of the voltages applied at its first input (VE1) and at its second input (VE2), each of which is applied to an input of the logic device (V1) and of a further logic device (V2) which is controlled by the third I/O port (IO3), the output of which can actuate the second controllable circuit breaker (R2).

2. Circuit arrangement according to Claim 1, **characterised in that** each of the level converters (PW1, PW2) has at least:
- one neutral conductor input for connecting a neutral conductor (N),
- at least one phase conductor input for connecting at least one phase conductor (L1, L2, L3),
- one operational amplifier (OV1, OV2, OV3) for each phase conductor input,
with the phase conductor inputs connected via series resistors (RV) to the inverting inputs of the operational amplifiers (OV1, OV2, OV3), and with the series resistors (RV) designed as a series connection of a plurality of individual resistors (R).

3. Circuit arrangement according to Claim 2, **characterised in that** the output voltages of the level converter (PW1, PW2) lie within the voltage range that can be sensed by the at least one voltage sensing input (A/D) of the microcontroller (MC).

4. Circuit arrangement according to Claim 3, **characterised in that** the output voltages of the level converters (PW1, PW2) lie within a voltage range between 0 V and 5 V.

5. Circuit arrangement according to Claim 1, **characterised in that** for each monitored phase conductor (L1, L2, L3) the voltage comparator (V) has at least:
- two impedance converters (OP1, OP2) the inputs of which are connected to the input terminals (VE1, VE2) of the voltage comparator (V),
- one difference amplifier (DV) which processes the output signals from the impedance converter (OP1, OP2), and
- one window comparator (FK) which compares the output signal from the difference amplifier (DV) for conformance with a prescribed range of voltage rates and emits a binary isolating signal (FS) allocated to the result of the comparison.

6. Circuit arrangement according to Claim 1, **characterised in that** the isolating signal (FS) of the voltage comparator (V) is applied to an I/O port (IO4) of the microprocessor (MC) in a non-reacting manner.

7. Circuit arrangement according to Claim 1, **characterised in that** the isolating signal (FS) co-determines the switching status of both circuit breakers (R1, R2).

8. Circuit arrangement according to Claim 1, **characterised in that** the microcontroller (MC) emits a pulse width modulated signal (PWM1, PWM3) to at least one I/O port (IO1, IO3), each of which is converted by a high pass (HP1, HP2) and an inverter (D1, D2) into a direct voltage which is applied to an input of a logic device (V1, V2).

## Revendications

1. Circuit de commutation pour la surveillance de tensions (UL1, UL2, UL3) sur des fils de phases (L1, L2, L3) d'un poste de commutation hors réseau, entre un onduleur (WR) et un réseau de tension alternative (WN),
avec un microcontrôleur (MC) qui présente plusieurs ports entrée-sortie (IO1, IO2, IO3, IO4),
sachant qu'un premier port entrée-sortie (IO1) excite une première entrée d'un module combinatoire (V1) et qu'un deuxième port entrée-sortie (IO2) excite un module de surveillance (V) dont la sortie (VA) est reliée à une deuxième entrée du module combinatoire (V1),
sachant que la sortie du module combinatoire (V1) peut exciter un premier sectionneur réglable (R1) qui présente des contacts de commutation (RG1) pour la liaison et la séparation des fils de phases (L1, L2, L3),
sachant qu'un troisième port entrée-sortie (IO3) peut influencer l'état de commutation d'un deuxième sectionneur réglable (R2) dont les contacts de commutation (RG2) sont connectés en série avec les contacts de commutation (RG1) du premier sectionneur réglable (R1),
sachant que le microcontrôleur (MC) comprend au moins une entrée de détection de tension (A/D) qui saisit des signaux de tension des fils de phases (L1, L2, L3) par l'intermédiaire des contacts de commutation (RG1, RG2) du premier et du deuxième sectionneur ((R1, R2),
**caractérisé en ce que**
chaque fil de phase (L1, L2, L3) est relié à des entrées d'un premier et d'un deuxième convertisseur de niveau (PW1, PW2) qui, à leurs sorties, émettent respectivement, pour chaque fil de phase (L1, L2, L3), un signal de tension inférieure, proportionnellement à la tension (UL1, UL2, UL3) du fil de phase (L1, L2, L3), par rapport au le neutre (N),
sachant que les sorties du premier convertisseur de niveau (PW1) sont associées aux entrées de détection de tension (A/D) du microcontrôleur (MC) et sachant que les sorties du deuxième convertisseur de niveau (PW2) sont associées à une première entrée (VE1) du module de surveillance qui forme un comparateur de tension (V),
sachant que le microcontrôleur (MC), par l'intermédiaire du port entrée-sortie (IO2), émet, pour chaque fil de phase (L1, L2, L3), un signal modulé en largeur d'impulsion (PWM2) dont le rapport cyclique dépend de la valeur de tension appliquée à l'entrées de détection de tension (A/D) associée, et qui est conduit par l'intermédiaire d'un passe-bas (TP2) à la deuxième entrée (VE2) du comparateur de tension (V),
sachant que ledit comparateur de tension (V) émet un signal de commutation libre (FS) numérique en fonction de la comparaison des tensions appliquées à sa première entrée (VE1) et à sa deuxième entrée (VE2), lequel signal est respectivement présent à une entrée du module combinatoire (V1) et d'un autre module combinatoire (V2) commandé par le troisième port entrée-sortie (IO3), dont la sortie peut commander le deuxième sectionneur réglable (R2).

2. Circuit de commutation selon la revendication 1, **caractérisé en ce que** chacun des convertisseurs de niveau (PW1, PW2) présente au moins
- une entrée de conducteur neutre pour le raccordement d'un conducteur neutre (N),
- au moins une entrée de fil de phase pour le raccordement d'au moins un fil de phase (L1, L2, L3),
- un amplificateur opérationnel (OV1, OV2, OV3) pour chaque entrée de fil de phase,
sachant que les entrées de fils de phases sont reliées aux entrées inversées des amplificateurs opérationnels (OV1, OV2, OV3), par l'intermédiaire des résistances série (RV) et que les résistances série (RV) sont réalisées en tant que connexion en série de plusieurs résistances individuelles (R).

3. Circuit de commutation selon la revendication 2, **caractérisé en ce que** les tensions de sortie des convertisseurs de niveau (PW1, PW2) sont situées dans la gamme de tension pouvant être détectée par l'au moins une entrée de détection de tension (A/D) du microcontrôleur (MC).

4. Circuit de commutation selon la revendication 3, **caractérisé en ce que** les tensions de sortie des convertisseurs de niveau (PW1, PW2) sont situées dans la gamme de tension de 0 V à 5 V.

5. Circuit de commutation selon la revendication 1, **caractérisé en ce que** le comparateur de tension (V) comprend, pour chaque fil de phase (L1, L2, L3) surveillé, au moins
- deux transformateurs d'impédance (OP1, OP2) dont les entrées sont reliées aux raccords d'entrée (VE1, VE2) du comparateur de tension (V),
- un amplificateur différentiel (DV) qui traite les signaux de sortie des transformateurs d'impédance (OP1, OP2),
- un comparateur à fenêtre (FK) qui compare le signal de sortie de l'amplificateur différentiel (DV) quant à la concordance avec une gamme de valeurs de tension et émet un signal de commutation libre (FS) binaire associé au résultat de la comparaison.

6. Circuit de commutation selon la revendication 1, **caractérisé en ce que** le signal de commutation libre (FS) du comparateur de tension (V) est présent, exempt de rétroaction, à un port entré-sortie (IO4) du microcontrôleur (MC).

7. Circuit de commutation selon la revendication 1, **caractérisé en ce que** le signal de commutation libre (FS) co-gestionne l'état de commutation des deux sectionneurs (R1, R2).

8. Circuit de commutation selon la revendication 1, **caractérisé en ce que** le microcontrôleur (MC) émet, sur au moins un port entrée-sortie (IO1, IO3), un signal modulé en largeur d'impulsion (PWM1, PWM3) qui est chaque fois transformé par un passe-haut (HP1, HP2) et un redresseur (D1, D2) en une tension continue qui est appliquée sur une entrée d'un module combinatoire (V1, V2).
